# EUROPÄISCHE PATENTSCHRIFT

(11) **EP 2 634 753 B1**
(45) Veröffentlichungstag und Bekanntmachung des Hinweises auf die Patenterteilung: **11.04.2018**
(21) Anmeldenummer: 13154144.3
(22) Anmeldetag: 06.02.2013
(51) Int. Cl.: G07C 9/00, G06K 19/07

(54) **Tragbarer Identifikationsgeber für ein passives Zugangssystem eines Kraftfahrzeugs**
Portable identifier for a passive access system of a motor vehicle
Transmetteur d'identification portable pour un système d'accès passif d'un véhicule automobile

(30) Priorität: 01.03.2012 DE 102012101727
(43) Veröffentlichungstag der Anmeldung: 04.09.2013
(73) Patentinhaber: Huf Hülsbeck & Fürst GmbH & Co. KG, 42551 Velbert (DE)
(72) Erfinder: Steegmann, Bernd, 42579 Heiligenhaus (DE); Ziller, Boris, 40885 Ratingen (DE)
(74) Vertreter: Zenz Patentanwälte Partnerschaft mbB

(56) Entgegenhaltungen:
- EP-A2- 1 013 517
- EP-A2- 1 098 283
- WO-A1-2007/096304
- DE-A1-102010 036 787
- US-A- 5 682 032

## Beschreibung

Die Erfindung betrifft einen tragbaren Identifikationsgeber für ein passives Zugangssystem eines Kraftfahrzeugs, der in einem Gehäuse eine Versorgungsbatterie, einen Mikrocontroller und von dem Mikrocontroller gesteuerte HF-Sende- und -Empfangsschaltungen zur Kommunikation mit einem kraftfahrzeugseitigen Steuergerät aufweist.

Derartige tragbare Identifikationsgeber, auch elektronische Schlüssel oder ID-Geber genannt, dienen dazu, einem Inhaber oder Träger des Identifikationsgebers den Zugang zu einem Kraftfahrzeug oder ein Verriegeln des Kraftfahrzeugs zu ermöglichen, ohne dass der Benutzer aktiv Eingabetasten des Identifikationsgebers betätigen muss. Der Bediener braucht den Identifikationsgeber nur mit sich zu führen (beispielsweise in der Bekleidung oder einer mitgeführten Tasche).

Diese Funktionalitäten werden als "Passive Keyless-Entry" oder "Keyless-go" bezeichnet. Im Gegensatz zur konventionellen Fernbedienung ist bei der "Passive Keyless-Entry-Funktionalität" keine aktive Bedienung des mobilen Identifikationsgebers zur Ver- oder Entriegelung (Sicherung und Entsicherung) der Schließvorrichtung oder zur Entsperrung der Wegfahrsperre notwendig. Beispielsweise wird bei der Betätigung des Türgriffes des Kraftfahrzeuges eine Kommunikation zwischen dem Kraftfahrzeug und dem Identifikationsgeber gestartet und bei positiver Identifikationsprüfung (Authentifikation) die elektrische Entriegelung der Schließvorrichtung aktiviert. Das bedeutet, dass der einen gültigen Identifikationsgeber mitführende Benutzer sein Kraftfahrzeug öffnen kann, ohne aktiv den Identifikationsgeber betätigen zu müssen.

Bei einem gewünschten Zutritt zu einem Fahrzeug ergibt sich beispielsweise folgender Ablauf:
Der den Identifikationsgeber mit sich führende Benutzer nähert sich der Fahrertür des Kraftfahrzeugs an und hintergreift beispielsweise einen Türgriff. In diesem Moment wird die Annäherung des Benutzers oder das Hintergreifen des Türgriffs von einem an der Tür angebrachten Sensor (beispielsweise von einem im Türgriff montierten kapazitiven Annäherungssensor) erfasst und einem kraftfahrzeugseitigen Steuergerät gemeldet. Selbstverständlich würde eine solche Erfassung und Meldung eines sich annähernden Benutzers auch dann vorgenommen werden, wenn der Benutzer nicht berechtigt ist, also keinen passenden Identifikationsgeber mit sich führt. Eine Annäherungserfassung und entsprechende Meldung wäre auch dann denkbar, wenn irgendein anderer Körper sich in bestimmter Weise an den Sensor annähert. Deshalb ist eine Zugangsberechtigung zu prüfen, bevor von dem kraftfahrzeugseitigen Steuergerät die Tür entriegelt und eine Betätigung des Türgriffs zum Öffnen der Tür freigegeben wird. Zu diesem Zweck findet ein mittels Austausch von Funksignalen ausgeführter Dialog zwischen dem kraftfahrzeugseitigen Steuergerät und einem in dem Identifikationsgeber enthaltenen Mikrocontroller statt. Dieser Dialog könnte grundsätzlich mit einem HF-Anfrage-Signal seitens des kraftfahrzeitseitigen Steuergeräts beginnen und mit einem von dem Identifikationsgeber abgestrahlten HF-Antwort-Signal weitergeführt werden. In diesem Fall müsste jedoch der Identifikationsgeber einen ständig aktiven HF-Empfänger enthalten. Ein weiterer Nachteil einer solchen HF-Kommunikation besteht in der Schwierigkeit, einen genau umgrenzten räumlichen Empfangsbereich in der Nähe des Fahrzeugs auszubilden. Um eine Aktivierung des Identifikationsgebers nur dann zu ermöglichen, wenn sich dieser in einem vorgegebenen räumlichen Bereich (benachbart zur Kraftfahrzeugtür) befindet, ist es im Stand der Technik üblich (aber nicht zwingend), dass das kraftfahrzeugseitige Steuergerät zunächst über einen LF-Sender mit einer zugehörigen Sendespule ein Wecksignal im LF-Frequenzbereich (z. B. bei 125 kHz) abstrahlt, wobei die Sendespule (beispielsweise im Türgriff) so angeordnet ist, dass sich ein vorgegebener Abstrahlbereich um den Türgriff herum von beispielsweise wenigen Metern ergibt. Der Identifikationsgeber andererseits wird mit einem zugehörigen LF-Empfänger ausgerüstet, der neben LF-Verstärkerschaltungen Empfangsspulen umfasst.

Ein Ausgang des LF-Empfängers ist mit einem Eingang des Mikrocontrollers gekoppelt. Wenn sich nun der bei dem Benutzer befindliche, mit einer LF-Empfangsschaltung ausgerüstete Identifikationsgeber dann, wenn der Benutzer auf den Türgriff zugreift, zugleich im Abstrahlbereich der LF-Sendespule des kraftfahrzeugseitigen Steuergeräts befindet, so empfängt er ein Wecksignal im LF-Frequenzbereich, welches unmittelbar nach Erfassen des Zugreifens des Bedieners bzw. seiner Annäherung von dem kraftfahrzeugseitigen Steuergerät über die Sendespule abgestrahlt wird. Das empfangene LF-Wecksignal dient dazu, den Mikrocontroller aufzuwecken und diesen programmgesteuert zu veranlassen, den HF-Signal-Dialog mit dem kraftfahrzeugseitigen Steuergerät zu beginnen. Deshalb kann der Mikrocontroller und können die HF-Sende- und -Empfangsschaltungen in einem Ruhezustand niedrigen Energieverbrauchs heruntergeschaltet bleiben. Allerdings muss die LF-Empfangsschaltung ständig eingeschaltet (aktiv) bleiben, um für den Empfang des Wecksignals bereitzustehen.

Da diese ständige Bereitschaft der elektronischen Komponenten zu einem Energieverbrauch und somit zur Entladung der Batterie des Identifikationsgebers führt, wurde in der Patentanmeldung DE 10 2010 036 787.7 vorgeschlagen, die LF-Empfangsschaltungen nicht ständig eingeschaltet zu lassen, sondern nur in vorgegebenen Abständen kurzzeitig zu aktivieren.

Außerdem ist aus der EP 0808971 bekannt, einen tragbaren Sendeempfänger mit einem Bewegungsschalter zu versehen.

Eine Möglichkeit zur Ausgestaltung eines Identifikationsgebers geht aus der EP 1 013 517 A2 hervor.

Trotz dieser vorgeschlagenen Maßnahme entlädt sich allerdings bei herkömmlichen ID-Gebern eine Spannungsquelle bei Nichtbenutzung. Tatsächlich wird ein ID-Geber jedoch wesentliche Anteile seiner Lebenszeit im unbenutzten Zustand verbringen. Insbesondere wenn ein ID-Geber vor der Auslieferung und Kopplung mit einem Fahrzeug nach der Fertigung längere Zeit unbenutzt gelagert wird, kann der Fall auftreten, dass die Batterie erheblich entladen ist, wenn der ID-Geber zur Auslieferung kommt.

Die Weckmechanismen, welche sensibel detektieren wann ein ID-Geber verwendet werden soll und diesen entsprechend zwischen einem Standby-Zustand und einem aktiven Zustand umschalten, sind jedoch entweder komplex, teuer oder unzuverlässig.

Der Erfindung liegt die Aufgabe zugrunde, den Energiespeicher des tragbaren Identifikationsgebers in solchen Zeiten, in denen der Identifikationsgeber nicht genutzt wird, zu schonen.

Diese Aufgabe wird erfindungsgemäß durch einen tragbaren Identifikationsgeber für ein passives Zugangssystem eines Kraftfahrzeugs mit den Merkmalen des Anspruchs 1 gelöst sowie durch ein Verfahren mit den Merkmalen des Anspruchs 9.

Der erfindungsgemäße Identifikationsgeber für ein passives Zugangssystem eines Kraftfahrzeugs weist in einem Gehäuse eine Versorgungsbatterie, einen Mikrocontroller und von dem Mikrocontroller gesteuerte HF-Sende- und -Empfangsschaltungen zur Kommunikation mit einem kraftfahrzeugseitigen Steuergerät auf (es kann eine mit dem Mikrocontroller gekoppelte LF-Empfangsschaltung mit LF-Empfangsspulen zum Empfangen von im LF-Frequenzbereich gesendeten LF-Wecksignalen und zur Ausgabe eines Wecksignals an den Mikrocontroller vorgesehen sein, diese ist jedoch für die Erfindung nicht wesentlich). Die Versorgungsbatterie ist mit dem Mikrocontroller gekoppelt.

Die Erfindung macht sich die Erkenntnis zu Nutze, dass Mikrocontroller anfällig für die Einkopplung elektromagnetischer Störungen sind.

Bekannt ist, dass Halbleiterelemente durch hochfrequente elektromagnetische Störenergie, wie sie typischerweise durch Funkdienste und elektrische Geräte verursacht werden, in ihrem Funktionsverhalten schwerwiegend zu beeinflussen sind. Es ist deshalb notwendig, dass bereits beim Entwerfen von ID-Gebern deren elektromagnetische Verträglichkeit (EMV) geeignet berücksichtigt wird. Mikroprozessoren weisen insbesondere Strukturen aus zwei unterschiedlich (positiv und negativ) dotierten Halbleitern auf, die, miteinander in Kontakt gebracht, Halbleiterübergänge im Substratträger erzeugen. Die Halbleiterübergänge bilden Diodenbauelemente welche in ihrer normalen Funktion sperrgepolt sind. Für hochfrequente Störsignale mit ausreichend hoher Amplitude, die sowohl innerhalb wie außerhalb des Arbeitsfrequenzbereiches des zu untersuchenden IC's liegen können, stellen solche Strukturen oft ein Gleichrichtersystem dar, durch das eine die Funktion störende Spannung erzeugt werden kann.

Doch nicht nur elektromagnetische (hochfrequente) Wechselfelder sind geeignet, die Funktion von Mikroprozessoren und Halbleiterbauelementen zu beeinflussen. Auch Influenzeffekte durch Ladungsansammlungen oder Ladungsverschiebungen können Effekte hervorrufen, insbesondere durch kapazitive Kopplung.

Es ist im Stand der Technik üblich, ungenutzte Eingänge auf high oder low-Pegel zu legen, um ein schwimmendes Potenzial (floating input) am Eingang zu vermeiden.

Die Erfindung macht sich diese Erkenntnis in einer sehr einfachen Weise zu Nutze, um eine sehr empfindliche Erfassung der bevorstehenden Benutzung zu ermöglichen.

Dazu wird ein Pin eines Eingangs des Mikrocontrollers als kapazitive Elektrode betrieben. Statt, wie bei ungenutzten Eingängen sonst üblich, den Eingang auf high oder low-Pegel zu legen, wird der Eingang ohne Potenzialvorgabe gelassen (Eingang schwimmend - floating). Es ist bekannt, dass schwimmende Eingänge (floating inputs) Störungen einkoppeln und Fehlverhalten in nachgeschalteten logischen Bauteilen des Mikrocontrollers auslösen können. Erfindungsgemäß ist dieser Effekt jedoch erwünscht, die eingekoppelten Störungen werden jedoch im Mikrocontroller verarbeitet, um den ID-Geber ggf. aus seinem Standby-Betrieb zu wecken. Es hat sich gezeigt, dass die Einkopplung von statischen oder Wechselfeldern zu deutlich detektierbaren Signaländerungen an den Eingängen eines Mikrocontrollers führen.

In einem Standby-Modus des ID-Gebers, in dem z.B. Anzeigeelemente, LF-Kommunikationseinrichtungen oder auch die HF-Komponenten deaktiviert sind und der Mikrocontroller in einem reduzierten Modus arbeitet, wird der Port auf Signaländerungen überwacht.

Es ist dabei sicherzustellen, dass der als Eingang Betriebene Anschluss nicht seitens des Mikrocontrollers auf ein festes Potenzial gezogen wird, wie dies bei einigen Controllern zum Schutz vor ungewollt floatenden Eingängen der Fall sein kann.

Werden signifikante Signaländerungen erfasst, z.B. Amplitudenänderungen von Signalschwankungen oder vorgegebene Signalstärken, so weckt der Mikroprozessor die Komponenten des ID-Gebers.

Es hat sich herausgestellt, dass bereits geringe Einflüsse ein Aufwecken des ID-Gebers bewirken können, da die Signaleingänge eines üblichen Mikrocontrollers empfindlich auf eingekoppelte Störungen reagieren. Es hat sich ferner gezeigt, dass sämtliche Einflüsse, welchen ein ID-Geber ausgesetzt ist wenn er von einem Benutzer in Betrieb genommen wird, messbare Einflüsse auf die eingekoppelten Signale am schwimmenden Eingang haben. Nimmt ein Benutzer einen abgelegten ID-Geber auf, so verändern sich die eingekoppelten Signale und der ID-Geber kann geweckt werden. Bereits ein leichtes Reiben des ID-Gebers an Kleidung (z.B. in einer Tasche der Kleidung), führt zu deutlich detektierbaren Signaländerungen.

Einmal geweckt, bleibt der ID-Geber so lange im aktivierten Betrieb, bis z.B. die Signale an dem offenen Anschluss für eine vorgegebene Zeitdauer unter eine Detektionsschwelle gefallen sind. Dies ist ein weiterer wesentlicher Vorteil der Erfindung. Es ist nicht nur möglich, den Beginn einer Benutzung zu detektieren. Stattdessen kann der Weckeingang überwacht werden, um die Nichtbenutzung für eine bestimmte Zeitdauer zu erfassen. Wird beispielsweise keine signifikante Signaländerung an dem Eingang für mehrere Stunden erfasst, so schaltet der ID-Geber in den Standby-Modus. Diese Erfassung der Nichtbenutzung kann auch kombiniert werden mit der Aktivierung über z.B. einen Tasstendruck, so dass zwar ein aktives Wecken bei Gebrauch erforderlich ist, jedoch automatisch in den Standby-Modus gewechselt wird.

Im Rahmen der Erfindung ist als Eingang ohne Potenzialvorgabe (floating input) ein Eingangskontakt zu verstehen, welcher eine Elektrode bildet, jedoch keine das Potenzial bestimmenden Bauelemente enthält.

Insbesondere kann dazu der Eingangspin gänzlich frei bleiben, also völlig ohne Verbindung auf der Leiterplatte. Der entsprechende Pin des Mikrocontrollers wird also in diesem Fall offen gelassen und die am Pin auftretenden Signale werden dennoch ausgelesen und verarbeitet. Wesentlich für die Erfindung ist, dass mit dem Eingang des Mikrocontroller keine aktiven Komponenten gekoppelt sind. Diese Realisierung liefert eine sensible Auswertung, welche sich nur die Programmierung des Mikrocontrollers ohne jede weitere Komponenten zu Nutze macht.

Wie beschrieben, wird der entsprechende Anschluss extern offen gelassen, intern jedoch ausgewertet und abgefragt. Diese Weckfunktionalität kommt gänzlich ohne zusätzliche Sensorkomponenten aus, sie nutzt einfach die Störungseinkopplung (oder Feldeinkopplung) und Umladungseffekte in den Anschlüsse des Mikrocontrollers aus. Die Differenzierung der Signale erfolgt im Mikroprozessor des Mikrocontrollers nach programmierten Bedingungen.

Für die Auswertung der Signale können insbesondere empirische Vergleichswerte herangezogen werden. Diese empirischen Werte können einfach mit Hilfe eines entsprechend programmierten Systems ermittelt werden. Ein erfindungsgemäß ausgestatteter ID-Geber kann hierfür unter Testbedingungen die erfassten Signale aufzeichnen, welche eine bevorstehende Benutzung anzeigen sollen. Im Rahmen der Entwicklung im Zusammenhang mit der Erfindung wurden bereits entsprechende einfache Situation nachgestellt, z.B. ein Signalveränderung bei Bewegung eines Benutzers, welcher den ID-Geber in der Kleidung trägt.

Es kann jedoch auch ein selbstlernender ID-Geber hergestellt werden, welcher die Signale am Weckeingang erfasst und außerdem eine Tatsächliche Benutzung des ID-Gebers, insbesondere eine LF-Weckung auswertet. Durch Verknüpfung der tatsächlichen Benutzung und der zuvor erfassten Wecksignale ist ein selbstlernendes System realisierbar (z.B. als neuronales Netz).

Insbesondere kann in dem Mikroprozessor ein Programm ablaufen welches eine nachgeführte Kalibrierung mit Zeitmittelung durchführt. Dadurch kann der ID-Geber sich an geänderte Umgebungsbedingungen anpassen. Ein abgelegter ID-Geber kann beispielsweise die eingekoppelten Störungen auf dem Weckanschluss über einen längeren Zeitraum Mitteln und diese Parameter der Störung (Frequenz, Amplitude etc.) bei der Auswertung der Signale auf signifikante Veränderungen berücksichtigen. Wird beispielsweise ein ID-Geber längere Zeit unbenutzt gelagert, ist dabei jedoch beispielsweise dem Tageslicht ausgesetzt, so verändern einwirkendes Tageslicht oder fehlendes Tageslicht und auch die Erwärmung oder Abkühlung die ein gekoppelten Störsignale. Diese Einflüsse, welche sich über Minuten oder über mehrere Stunden verändern, können durch Berücksichtigung einer gleitenden Kalibrierung bei der Signalerfassung herausgerechnet werden. Ein Wecksignal wird nur dann erfasst, wenn die Abweichungen von dem gleitenden Mittelwert um mehr als einen vorgegebenen Wert abweichen, z.B. um mehr als 100% und für länger als 1 Sekunde.

In einer Ausbildung der Erfindung ist der Anschluss des Mikrocontrollers, welcher als Weckanschluss verwendet wird, in dem ID-Geber verlängert, so dass er sich von dem Anschlusspin im Gehäuse erstreckt. Dies bedeutet, dass mit dem Anschluss eine erfindungsgemäße offene Leiterbahn gekoppelt ist. Als offene Leiterbahn ist eine Leiterbahn ohne jede Potenzialvorgabe (floating) zu verstehen, mit welcher keine weitere elektronische Komponente gekoppelt ist, so dass die Leiterbahn an sich die einzige Einflussgröße darstellt. Die Länge einer solchen Leiterankopplung kann einige Millimeter bis zu cm betragen.

In einer Weiterbildung der Erfindung ist der Eingang zur Ableitung einer angesammelten Ladung temporär zur Kopplung mit einem vorgegebenen Potenzial koppelbar.

Wird festgestellt, dass die eingekoppelten Signale nicht mehr auswertbar sind, kann der Eingang zeitweise auf ein vorgegebenes Potenzial, z.B. auf Masse, gezogen werden. Nach einem Potenzialausgleich wird die Entkopplung vorgenommen und der Eingang wird wieder ohne Potenzialvorgabe betrieben. Diese Maßnahme kann insbesondere erforderlich sein, wenn sich eine größere Ladungsmenge auf dem Eingang angesammelt hat.

Vorteilhafte und/oder bevorzugte Weiterbildungen der Erfindung sind in den Unteransprüchen gekennzeichnet.

Im Folgenden wird die Erfindung anhand einer in der Zeichnung dargestellten bevorzugten Ausführungsform näher erläutert. In der Zeichnung zeigt:

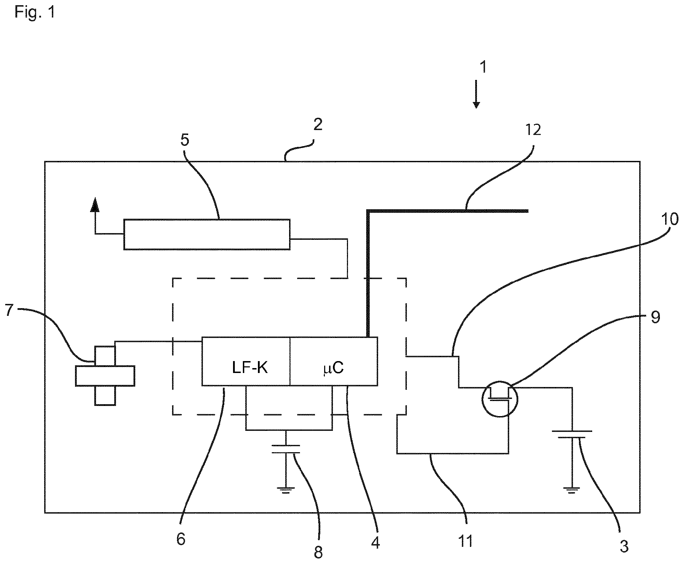

Figur 1 eine schematische Blockdarstellung des erfindungsgemäßen Identifikationsgebers.

Figur 1 zeigt eine schematische Darstellung des erfindungsgemäßen tragbaren Identifikationsgebers 1 für ein passives Zugangssystem eines Kraftfahrzeugs. Der gezeigt ID-Geber implementiert neben der erfindungsgemäßen Benutzungserfassung außerdem eine weitere Maßnahme zur Energieeinsparung, die in einer weiteren Anmeldung der Anmelderin näher beschrieben ist.

In einem Gehäuse 2 sind diverse Schaltungskomponenten und eine Versorgungsbatterie 3 untergebracht. Die Schaltungsanordnung umfasst einen Mikrocontroller 4, welcher die üblichen Komponenten enthält, wie beispielsweise einen Mikroprozessor, einen nicht-flüchtigen Speicher für Programme und Konfigurationsdaten, einen flüchtigen Speicher (RAM) für die Datenspeicherung und diverse Eingabe- und Ausgabe-Schnittstellenschaltungen sowie ein diese Komponenten koppelndes internes Bussystem. Zur bidirektionalen Kommunikation mit einem kraftfahrzeugseitigen Steuergerät sind HF-Sende- und -Empfangsschaltungen 5 vorgesehen, die mit Eingabe/Ausgabe-Ports des Mikrocontrollers 4 verbunden sind. Der Empfang der HF-Signale sowie das Abstrahlen der HF-Signale der HF-Sende- und - Empfangsschaltungen 5 erfolgt über eine Antenne. Die Kommunikation zwischen den HF-Sende- und -Empfangsschaltungen 5 mit dem kraftfahrzeugseitigen Steuergerät findet beispielsweise im MHz-Bereich statt. Die Details der Schaltungen 5 sind in Figur 1 nicht näher dargestellt und werden hier auch nicht näher beschrieben, da sie für das Wesen der Erfindung von untergeordneter Bedeutung sind. Selbstverständlich kann der ID-Geber zusätzliche Funktionselemente, wie z.B. Taster oder mechanische Schließeinrichtungen aufweisen.

Der Identifikationsgeber 1 enthält in diesem Ausführungsbeispiel eine LF-Empfangsschaltung, bestehend aus 3D-Empfangsspulen 7 und eine LF-Kopplungsschaltung (LF-K) 6. Derartige 3D-Spulenanordnungen sind bekannt, z.B. aus der DE 601 07 512 T2. Eine solche LF-Spulenanordnung weist im Wesentlichen orthogonale Spulen in verschiedenen Raumrichtungen auf, welche mit einem Niederfrequenzempfänger (LF-Empfänger) verbunden sind (es ist grundsätzlich auch möglich, mehrere Niederfrequenzempfänger zu verwenden).

Die LF- Kopplungsschaltung ist mit Eingabe-Ports des Mikrocontrollers 4 gekoppelt. Die LF-Kopplungsschaltung dient sowohl zur LF-Kommunikation als auch zur drahtlosen Aufladung des Pufferspeichers 8. Dieser Pufferspeicher ist in diesem Beispiel als Kondensator ausgebildet, welcher eine geeignete Kapazität aufweist, um bei der durch die LF-Kopplungsschaltung bereitgestellten Spannung auf eine Ladung aufgeladen zu werden, die den Mikrocontroller betreiben kann. Die LF-Kopplungsschaltung enthält dazu eine entsprechende Ladeschaltung, welche bei einwirkendem LF-Speisefeld automatisch eine Ladespannung an den Pufferspeicher anlegt.

Es ist bekannt, ID-Geber in Aufnahmen am Kraftfahrzeug einzuschieben oder einzulegen, um auch bei erschöpfter Energiequelle des ID-Gebers die Wegfahrsperre des Fahrzeugs freigeben zu können. Dabei wird über ein Transponderfeld Energie zur Kommunikation in den ID-Geber über die LF-Spulenanordnung 7 übertragen.

Es ist ebenfalls bekannt, Energiespeicher in ID-Gebern durch induktive Koppelung aufzuladen. Die DE 10 2004 023 197 offenbart eine derartige Aufladung des Energiespeichers in einem ID-Geber. Eine solche Aufladung erfolgt z.B. erst, wenn eine erfolgreiche Sicherheitsabfrage des Schlüssels stattgefunden hat (siehe auch US 2002/0209582). Dieselben Konzepte werden hier erfindungsgemäß eingesetzt, um Energie für den Kopplungsvorgang mit der Batterie aus dem LF-Feld abzuziehen und zu speichern.

Ist der Kondensator 8 ausreichend aufgeladen, was durch eine Spannungsüberprüfung verifiziert werden kann, so stellt er Energie bereit, damit der Mikrocontroller 4, welcher Teil der Steuereinrichtung des ID-Gebers ist, den Kopplungsvorgang der Batterie starten kann. Der Mikrocontroller 4 arbeitet eine Befehlsfolge ab, welche das Gate eines MOSFET 9 versorgt und so die im Schlüssel befindliche Spannungsquelle 3 zur Versorgung der Schlüsselbauteile einkoppelt. Sobald diese Versorgung über die Leitung 10 durch Schalten des MOSFET 9 bewirkt ist, ist die Steuereinrichtung unabhängig von dem Pufferspeicher 8 und wird dauerhaft durch die Batterie 3 versorgt. In diesem Zustand der Komplettversorgung durch die Batterie 3 kann der Mikrocontroller auch zur HF-Kommunikation auf das HF-Modul 5 zugreifen und eine entsprechende HF-Kommunikation ausführen. Der Schlüssel ist also aktiviert und nicht mehr auf die Versorgung über die Einkopplung eines elektromagnetischen Feldes in die Spulenanordnung 7 angewiesen. Eine entsprechende Schaltungsanordnung sorgt dafür, dass über die Leitung 11 weiterhin der MOSFET 9 leitend gehalten wird.

Dieser ID-Geber koppelt entsprechend die Batterie 3 erst zur Versorgung der übrigen Komponenten ein, wenn erstmalig ein entsprechender Weckvorgang durch Energieversorgung über die Spulenanordnung 7 stattgefunden hat. Auf diese Weise kann der ID-Geber lange Zeit, sogar jahrelang, ohne nennenswerte Entladung gelagert werden und bei Inbetriebnahme zur vollständigen Funktionsfreischaltung aktiviert werden. Außerdem kann durch eine geeignete Steuerungsmaßnahme über die Steuereinrichtung, insbesondere den Mikrocontroller 4 der elektronische Schalter 9 wieder deaktiviert werden, z.B. wenn für mehrere Wochen oder Monate keine Benutzung des ID-Gebers stattgefunden hat. Dies ist insbesondere vorteilhaft, wenn beispielsweise Reserveschlüssel für Kraftfahrzeuge unbenutzt gelagert werden. Durch den Einschub des Schlüssels in die entsprechende Aufnahme am Kraftfahrzeug wird das System wieder in den aktiven Zustand gebracht und die Spannungsversorgung eingekoppelt.

Der beschriebene ID-Geber enthält als erste Stufe einer Maßnahme zur Energieeinsparung daher eine Vorrichtung zur zeitweisen Energieversorgung über die Feldeinkoppelung in die LF-Spulen die Spannungsversorgung des ID-Gebers geweckt wird. Nach diesem Weckvorgang ist das gesamte System unabhängig von einer Energieversorgung über die LF-Spulen.

Zur Realisierung der Erfindung ist eine Elektrode 12 mit einem Eingang des Mikrocontrollers gekoppelt. Es handelt sich bei der Elektrode 12 um eine einfache Leiterbahn, welche auf eine Platine gedruckt ist. Die Elektrode 12 dient als kapazitive Elektrode zur Einkoppelung von Störungen in den Weckeingang des gekoppelten Eingangs des Mikrocontrollers. Die Elektrode 12 ist als floating-Elektrode ausgebildet, ihr Potenzial wird also von gesammelten Ladungen bestimmt. Die Elektrode ist durch die Logik des Mikrocontrollers bei Überschreiten von vorgegebenen Schwellwerten oder von Zeit zu Zeit mit dem Massepotenzial koppelbar. Dies kann erforderlich sein, wenn das Potenzial am Eingang zu groß ist oder in Abhängigkeit von sonstigen Betriebsvorgaben des ID-Gebers. Es kann auch ein Standard-Zustand sein und die Elektrode 12 wird nur dann auf schwimmendes Potenzial freigegeben, wenn eine Erfassung der eingekoppelten Störungen erfolgen soll.

Der Mikrocontroller überwacht bei potenzialmäßig schwimmender Elektrode den Eingang und wertet die Signale aus, welche erfasst werden und von den gesammelten Ladungen bestimmt werden.

Die Signale werden hinsichtlich ihres Pegels und ggf. ihres Zeitverhaltens analysiert und es wird geprüft, ob ein die Aktivierung des ID-Gebers auslösendes Signal vorliegt. Dafür können insbesondere empirische Vergleichswerte herangezogen werden.

Wesentlich an der Erfindung ist es, dass ohne Verwendung eines Sensors, durch blosse Kopplung eines potenzialmäßig schwimmenden Eingangs des Mikrocontrollers mit einer Auswertung, ein Weckvorgang im ID-Geber initiiert wird.

## Patentansprüche

1. Tragbarer Identifikationsgeber (1) für ein passives Zugangssystem eines Kraftfahrzeugs, wobei der Identifikationsgeber in einem Gehäuse (2) aufweist:
a) eine Versorgungsbatterie (3),
b) einen Mikrocontroller (4),
c) von dem Mikrocontroller (4) gesteuerte HF-Sende- und -Empfangsschaltungen (5) zur Kommunikation mit einem kraftfahrzeugseitigen Steuergerät,
**gekennzeichnet durch**,
d) einen Pin eines als Weckeingang genutzten schwimmenden Eingangs des Mikrocontrollers, wobei der Pin als kapazitive Elektrode ohne Potenzialvorgabe geschaltet ist, wobei die Eingangssignale am Weckeingang im Mikrocontroller auswertbar sind, um die Ladungsveränderungen auf dem Pin als Wecksignal zu detektieren,
und wobei
entweder der Pin als freier Pin vorgesehen ist
oder der Pin mit einer offenen Leiterbahn gekoppelt ist zur sich im Gehäuse erstreckenden Verlängerung des Pins in den Identifikationsgeber.

2. Identifikationsgeber nach Anspruch 1, wobei der Mikrocontroller in Abhängigkeit von den Signalen am Weckeingang zur energiesparenden Deaktivierung von elektronischen Baugruppen ausgebildet ist.

3. Identifikationsgeber nach Anspruch 1 oder 2, wobei der Pin des Mikrocontrollers als freier Pin vorgesehen ist und der Pin des Mikrocontrollers galvanisch getrennt von übrigen elektronischen Komponenten des ID-Gebers ist.

4. Identifikationsgeber nach Anspruch 1 oder 2, wobei der Pin mit einem Leiter gekoppelt ist, welcher galvanisch getrennt von übrigen elektronischen Komponenten des ID-Gebers ist.

5. Identifikationsgeber nach einem der vorangehenden Ansprüche, wobei der Mikrocontroller den Pin zum Zurücksetzen des Weckeingangs zeitweise mit einem Bezugspotenzial koppeln kann.

6. Identifikationsgeber nach einem der vorangehenden Ansprüche, wobei eine mit dem Mikrocontroller (4) gekoppelte LF-Schaltungsanordnung (6, 7) mit LF-Antennen (7) zum Einkoppeln von elektromagnetischen Feldern im LF-Frequenzbereich vorgesehen ist, wobei
der Identifikationsgeber einen elektrischen Pufferspeicher (8) aufweist, welcher mit der LF-Schaltungsanordnung (6, 7) gekoppelt ist, um den elektrischen Pufferspeicher durch Energieaufnahme aus über die LF-Antennen eingekoppelten elektromagnetischen Feldern aufzuladen,
wobei eine elektronische Schalteinrichtung (9) die Batterie (3) von dem Mikrocontroller (4) entkoppeln kann,
wobei der Mikrocontroller und die LF-Schaltungsanordnung derart mit dem Pufferspeicher (8) gekoppelt und ausgebildet sind, dass bei Aufladung des Pufferspeichers über ein vorgegebenes Ladungsniveau die geöffnete elektronische Schalteinrichtung (9) zur Kopplung der Batterie (3) mit dem Mikrocontroller (4) durch den Mikrocontroller und unter Energieversorgung des Mikrocontrollers aus dem Pufferspeicher ansteuerbar ist.

7. Identifikationsgeber nach Anspruch 6, wobei die elektronische Schalteinrichtung (9) einen MOSFET aufweist.

8. Identifikationsgeber nach Anspruch 6 oder 7, wobei eine Selbsthaltungsschaltung vorgesehen ist, welche die leitende Kopplungsstellung der elektronischen Schalteinrichtung (9) aufrecht erhält, sobald der Mikrocontroller (4) die Kopplung der Batterie (3) mit dem Mikrocontroller hergestellt hat.

9. Verfahren zum energiesparenden Betreiben eines tragbaren Identifikationsgebers für ein passives Zugangssystem eines Kraftfahrzeugs, wobei der Identifikationsgeber (1) in einem Gehäuse (2) eine Versorgungsbatterie (3), einen Mikrocontroller (4) und von dem Mikrocontroller (4) gesteuerte HF-Sende- und -Empfangsschaltungen (5) zur Kommunikation mit einem kraftfahrzeugseitigen Steuergerät aufweist,
aufweisend die Schritte,
Betreiben eines Eingangs des Mikrocontrollers als Weckeingang, indem dessen Pin als kapazitive Elektrode ohne Potenzialvorgabe geschaltet wird,
wobei
entweder der Pin als freier Pin vorgesehen ist
oder der Pin mit einer offenen Leiterbahn gekoppelt ist zur sich im Gehäuse erstreckenden Verlängerung des Pins in den Identifikationsgeber,
Erfassen und Auswerten der Eingangssignale am Weckeingang im Mikrocontroller, um die Ladungsveränderungen auf dem Pin als Wecksignal zu detektieren,
Wecken von Systemkomponenten im Mikrocontroller aus einem stromsparenden Ruhemodus, sofern die erfassten Signale eine signifikante Veränderung aufweisen, welche auf eine Benutzungsaufnahme des ID-Gebers hinweist.

10. Verfahren nach Anspruch 9, wobei mittels des Mikrocontrollers in Abhängigkeit von den Signalen am Weckeingang elektronische Baugruppen zur Energieeinsparung deaktiviert oder aktiviert werden.

11. Verfahren nach Anspruch 9, wobei dann, wenn für eine vorgegebene Zeitspanne keine Wecksignale erfasst wurden, der ID-Geber in einen Ruhemodus versetzt wird.

## Claims

1. A portable identification encoder (1) for a passive access system of a motor vehicle, wherein the identification encoder comprises in a housing (2):
a) a supply battery (3),
b) a microcontroller (4),
c) RF transmitting and receiving circuits (5) controlled by the microcontroller (4) for communication with a motor vehicle-side control unit,
**characterized by**
d) a pin of a floating input of the microcontroller used as a wake-up input, the pin being connected as a floating-potential capacitive electrode, wherein the input signals at the wake-up input can be evaluated in the microcontroller in order to detect the changes in charge on the pin as a wake-up signal,
and wherein
either the pin is provided as a free pin
or the pin is coupled to a floating conductor track to the extension of the pin in the housing into the identification encoder.

2. The identification encoder according to claim 1, wherein the microcontroller is designed for energy-saving deactivation of electronic modules in accordance with the signals at the wake-up input.

3. The identification encoder according to claim 1 or 2, wherein the pin of the microcontroller is provided as a free pin and the pin of the microcontroller is galvanically isolated from the remaining electronic components of the ID encoder.

4. Identification encoder according to claim 1 or 2, wherein the pin is coupled to a conductor, which is galvanically isolated from the remaining electronic components of the ID encoder.

5. The identification encoder according to any one of the previous claims, wherein the microcontroller can temporarily connect the pin to a reference potential to reset the wake-up input.

6. The identification encoder according to any one of the previous claims, wherein an LF circuit arrangement (6, 7) with LF antennas (7) coupled to the microcontroller (4) is provided for coupling in electromagnetic fields in the LF frequency range, wherein
the identification encoder has an electrical buffer store (8), which is coupled to the LF circuit arrangement (6, 7) in order to charge up the electrical buffer store by energy absorption from electromagnetic fields coupled in via the LF antennas,
wherein an electronic switching device (9) can decouple the battery (3) from the microcontroller (4),
wherein the micro-controller and the LF circuit arrangement are coupled to the buffer store (8) and designed in such a way that, when the buffer level is charged above a predefined charge level, to connect the battery (3) to the microcontroller (4) the open electronic switching device (9) can be controlled by the microcontroller while the microcontroller is supplied with power from the buffer store.

7. The identification encoder according to claim 6, wherein the electronic switching device (9) comprises a MOSFET.

8. The identification encoder according to claim 6 or 7, wherein a self-latching circuit is provided, which maintains the conducting coupling position of the electronic switching device (9) as soon as the microcontroller (4) has established the coupling of the battery (3) to the micro-controller.

9. A method for energy-saving operation of a portable identification encoder for a passive access system of a motor vehicle, wherein the identification sensor (1) in a housing (2) has a supply battery (3), a microcontroller (4) and RF-transmitting and -receiving circuits (5) controlled by the microcontroller (4) for communication with a motor vehicle-side control unit,
comprising the steps,
operating one input of the microcontroller as a wake-up input by connecting its pin as a floating-potential capacitive electrode,
wherein
either the pin is provided as a free pin
or the pin is coupled to a floating conductor track to the extension of the pin in the housing into the identification encoder,
recording and evaluating the input signals at the wake-up input in the microcontroller, in order to detect the charge changes on the pin as a wake-up signal,
waking up system components in the microcontroller from a power-saving standby mode, provided the detected signals show a significant change, which indicates the start of a use of the ID encoder.

10. The method according to claim 9, wherein using the microcontroller, in accordance with the signals at the wake-up input, electronic modules for energy saving are disabled or enabled.

11. The method according to claim 9, wherein when no wake-up signals have been recorded for a given period of time, the ID transmitter is set into a standby mode.

## Revendications

1. Transmetteur d'identification portable (1) pour un système d'accès passif d'un véhicule automobile, dans lequel le transmetteur d'identification présente, dans un boîtier (2),
a) une batterie d'alimentation (3),
b) un microcontrôleur (4),
c) des circuits d'émission et de réception HF (5) commandés par le microcontrôleur (4) pour la communication avec un appareil de commande côté véhicule automobile,
**caractérisé par**
d) une broche d'une entrée flottante utilisée en tant qu'entrée de réveil du microcontrôleur, dans lequel la broche est mise en circuit en tant qu'électrode capacitive sans valeur de consigne de potentiel, dans lequel les signaux d'entrée à l'entrée de réveil peuvent être évalués dans le microcontrôleur pour détecter les variations de charge sur la broche en tant que signal de réveil,
et dans lequel
la broche est prévue en tant que broche libre
ou bien la broche est couplée avec une carte de circuits imprimés ouverte pour un prolongement de la broche, s'étendant dans le boîtier, dans le transmetteur d'identification.

2. Transmetteur d'identification selon la revendication 1, dans lequel le microcontrôleur est réalisé, en fonction des signaux à l'entrée de réveil, pour la désactivation à économie d'énergie de modules électroniques.

3. Transmetteur d'identification selon la revendication 1 ou 2, dans lequel la broche du microcontrôleur est prévue en tant que broche libre et la broche du microcontrôleur est séparée galvaniquement d'autres composants électroniques du transmetteur d'ID.

4. Transmetteur d'identification selon la revendication 1 ou 2, dans lequel la broche est couplée avec un conducteur, lequel est séparé galvaniquement d'autres composants électroniques du transmetteur d'ID.

5. Transmetteur d'identification selon l'une des revendications précédentes, dans lequel le microcontrôleur peut temporairement coupler la broche avec un potentiel de référence pour la réinitialisation de l'entrée de réveil.

6. Transmetteur d'identification selon l'une des revendications précédentes, dans lequel une configuration de circuit LF (6, 7) couplée avec le microcontrôleur (4) avec des antennes LF (7) pour l'alimentation en champs électromagnétiques dans la plage de fréquences LF est prévue, dans lequel
le transmetteur d'identification présente une mémoire tampon électrique (8) couplée avec la configuration de circuit LF (6, 7) pour charger la mémoire tampon électrique par absorption d'énergie issue des champs électromagnétiques alimentés via les antennes LF,
dans lequel un dispositif de commutation électronique (9) peut découpler la batterie (3) du microcontrôleur (4),
dans lequel le microcontrôleur et la configuration de circuits LF sont réalisés et couplés avec la mémoire tampon (8) d'une façon telle, qu'en cas de charge de la mémoire tampon au-delà d'un niveau de charge prédéfini, le dispositif de commutation électronique (9) ouvert peut, pour le couplage de la batterie (3) avec le microcontrôleur (4), être commandé par le microcontrôleur et en alimentant le microcontrôleur en énergie issue de la mémoire tampon.

7. Transmetteur d'identification selon la revendication 6, dans lequel le dispositif de commutation électronique (9) présente un transistor MOSFET.

8. Transmetteur d'identification selon la revendication 6 ou 7, dans lequel un circuit de maintien est prévu, lequel maintien la position de couplage conductrice du dispositif de commutation électronique (9) dès que le microcontrôleur (4) a établi le couplage de la batterie (3) avec le microcontrôleur.

9. Procédé pour l'exploitation à économie d'énergie d'un transmetteur d'identification portable pour un système d'accès passif d'un véhicule automobile, dans lequel le transmetteur d'identification (1) présente, dans un boîtier (2), une batterie d'alimentation (3), un microcontrôleur (4) et des circuits d'émission et de réception HF (5) commandés par le microcontrôleur (4) pour la communication avec un appareil de commande côté véhicule automobile,
présentant les étapes suivantes :
l'exploitation d'une entrée du microcontrôleur en tant qu'entrée de réveil en ce que la broche de celle-ci est mise en circuit en tant qu'électrode capacitive sans valeur de consigne de potentiel,
dans lequel
la broche est prévue en tant que broche libre
ou bien la broche est couplée avec une carte de circuits imprimés ouverte pour un prolongement de la broche, s'étendant dans le boîtier, dans le transmetteur d'identification,
la détection et l'évaluation des signaux d'entrée à l'entrée de réveil dans le microcontrôleur pour détecter les variations de charge sur la broche en tant que signal de réveil,
le réveil de composants système dans le microcontrôleur d'un mode de repos à économie d'énergie dans la mesure où les signaux détectés présentent une variation significative, laquelle indique une reprise d'utilisation du transmetteur d'ID.

10. Procédé selon la revendication 9, dans lequel, au moyen du microcontrôleur, en fonction des signaux à l'entrée de réveil, des modules électroniques sont désactivés ou activés pour économiser de l'énergie.

11. Procédé selon la revendication 9, dans lequel, lorsqu'aucun signal de réveil n'a été détecté pendant un laps de temps prédéfini, on fait passer le transmetteur d'ID à un mode de repos.
